# EUROPÄISCHE PATENTSCHRIFT

(11) **EP 0 778 725 B1**
(45) Veröffentlichungstag und Bekanntmachung des Hinweises auf die Patenterteilung: **16.09.1998**
(21) Anmeldenummer: 95929838.1
(22) Anmeldetag: 10.08.1995
(51) Int. Cl.: A01D 34/73

(54) **FADENSCHNEIDER**
LAWN TRIMMER
TONDEUSE A FIL

(30) Priorität: 30.08.1994 DE 4430788
(43) Veröffentlichungstag der Anmeldung: 18.06.1997
(73) Patentinhaber: WOLF-Geräte GmbH Vertriebsgesellschaft KG, D-57518 Betzdorf/Sieg (DE)
(72) Erfinder: ORTHEY, Gebhard, D-57583 Nauroth (DE); WEID, Helmut, D-57520 Niederdreisbach (DE)
(74) Vertreter: Koch, Günther, Dipl.-Ing.
(86) Internationale Anmeldenummer: EP9503173
(87) Internationale Veröffentlichungsnummer: WO9606523

(56) Entgegenhaltungen:
- EP-A- 0 005 540
- EP-A- 0 603 982
- US-A- 2 702 978
- US-A- 4 603 478
- Prospektus Adlus "Aus Spass an der Natur 7/92"

## Beschreibung

Die Erfindung bezieht sich auf einen Fadenschneider der im Oberbegriff des Patentanspruchs 1 angegebenen Gattung. Ein solcher Fadenschneider ist aus dem Prospekt adlus 'Aus Spaß an der Natur' 7/92 bekannt. Bei den in diesem Prospekt gezeigten Geräten adlus ufomatic und adlus ufotronic ist eine stielneigungsverstellung möglich, und zur Verstellung muß eine Fußauslösetaste betätigt werden, die aus dem Gehäuse nach hinten vorsteht. Bei Betätigung dieser Auslösetaste und festgehaltenem Führungsstiel wird das Gehäuse unkontrolliert um die Horizontalachse verschwenkt, weil beim Niederdrücken der Fußauslösetaste ein Drehmoment ausgeübt wird, welches danach trachtet, den nach vorn auskragenden Teil des Gerätes anzuheben. Zu einer feinfühligen Einstellung ist es demgemäß notwendig, das Gehäuse festzuhalten und den Stiel in die gewünschte Winkellage zu überführen. Diese Schwenkbewegung um die Laufrollen wird auch dann verursacht, wenn das Gerät außer auf den Rollen bei losgelassenem Handgriff über das Spulengehäuse am Boden abgestützt ist. Bei diesem Gerät, wie auch bei anderen bekannten Fadenschneidern, ist es daher üblich, daß der Benutzer das Fadenschneidergehäuse festhält und den Stiel dann gegenüber dem Gehäuse verstellt, wobei häufig der Fußauslösehebel durch Hand betätigt wurde.

Der Erfindung liegt die Aufgabe zugrunde, einen gattungsgemäßen Fadenschneider derart auszubilden, daß dieser auch bei Betätigung des Fußauslösers und nach dessen Betätigung eine stabile Stützlage einnimmt, so daß der Stiel bequem, schnell und sicher in die gewünschte Winkellage verstellt werden kann, ohne daß es notwendig wäre, das Gehäuse festzuhalten.

Gelöst wird die gestellte Aufgabe durch die im Kennzeichnungsteil des Patentanspruchs 1 angegebenen Merkmale.

Durch die Erfindung wird erreicht, daß bei Niederdrücken des Fußauslösehebels die Krafteinleitung fast momentenfrei erfolgen kann, so daß die Winkelverstellung des Stiels selbst dann vorgenommen werden kann, wenn das als Abstandshalter für das Spulengehäuse ausgebildete Stützglied, welches bügelförmig ist, den Boden nicht berührt.

Dieses Stützglied, welches als Abstandshalter so angeordnet ist, daß das Spulengehäuse den Boden nicht berühren kann, bildet gleichzeitig eine Kufe, auf der der Fadenschneider gleiten kann, während er auf der Laufrolle abrollt.

Der Fußauslöser ist erfindungsgemäß im Fadenschneidergehäuse derart integriert, daß er nicht über den Schutzschirmrand vorsteht, so daß ein Verheddern unter Bäumen und Sträuchen verhindert ist. In Verbindung mit dem leicht lösbaren und rastbaren Drehgelenk kann der erfindungsgemäße Fadenschneider jeweils in jener Lage benutzt werden, die für die Bedienungsperson am bequemsten ist, d.h. es ist auch ein Schneiden des Grases unter Bäumen und Sträuchern bequem möglich.

Weitere Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:

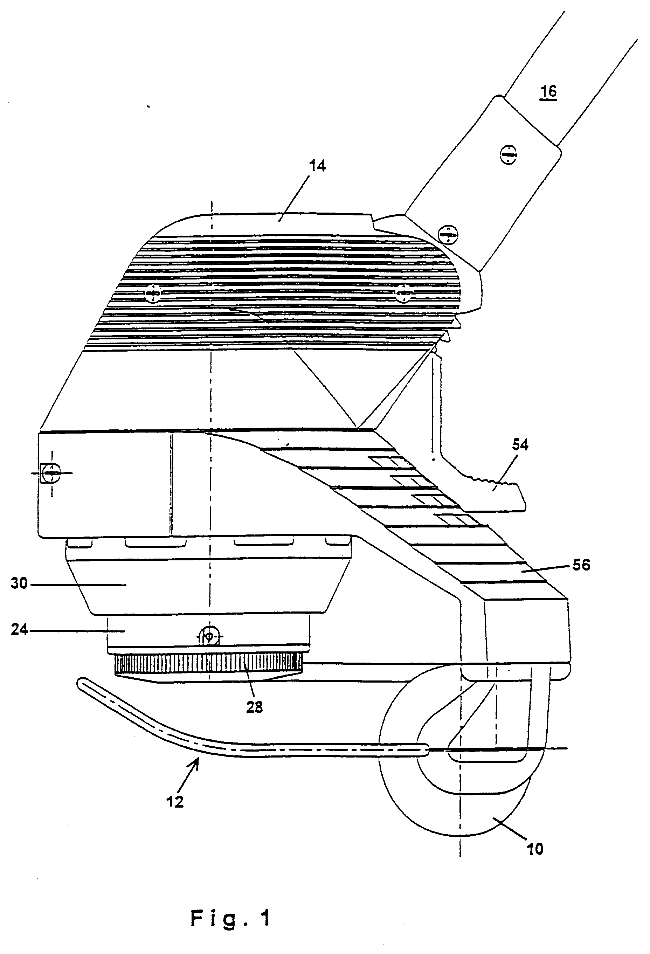

- Fig. 1: eine Seitenansicht des erfindungsgemäß ausgebildeten Fadenschneiders;
- Fig. 2: einen Vertikalschnitt des in Fig. 1 dargestellten Fadenschneiders;

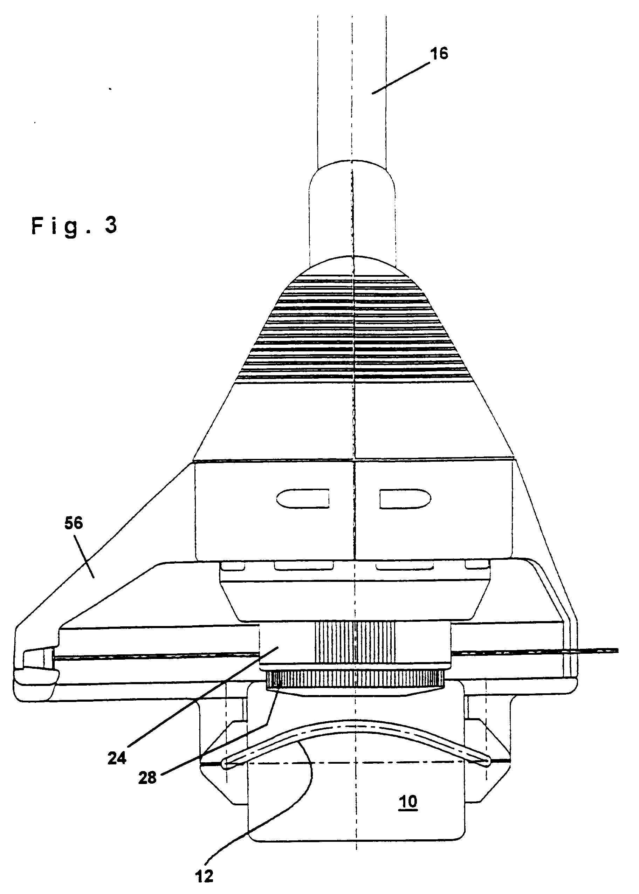

- Fig. 3: eine Vorderansicht des in Fig. 1 dargestellten Fadenschneiders;

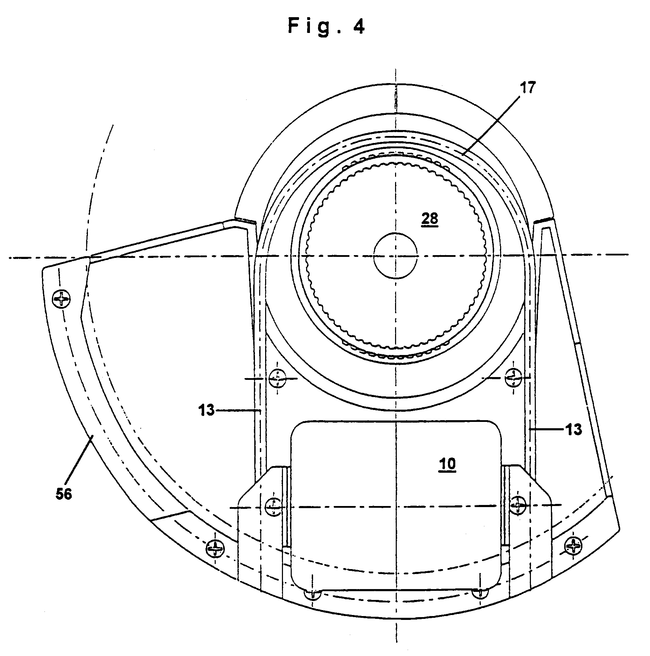

- Fig. 4: eine Ansicht des Fadenschneiders von unten her.

Der Fadenschneider weist ein Fadenschneidergehäuse 14 auf, das von einer Laufrolle 10 getragen wird. Das Gehäuse 14 trägt ferner ein als Kufe 12 ausgebildetes Stützglied, das als Bügel ausgebildet ist und mit seinen Bügelschenkeln 13 am Gehäuse seitlich der Laufrolle 10 in Höhe der Laufrollenachse 15 ansetzt, im wesentlichen horizontal nach vorn verläuft und im gekrümmten Übergangsabschnitt 17 bis in die Nähe des Spulengehäusedeckels 28 nach oben gezogen ist. Im Gehäuse ist ein Elektromotor 20 mit vertikaler Abtriebswelle 22 angeordnet. Diese Abtriebswelle 22 trägt ein Spulengehäuse 24 mit der Fadenspule 26 und dem Deckel 28 des Spulengehäuses. Der Schneidfaden steht in radialer Richtung durch das Spulengehäuse 24 nach außen vor.

Ein am Fadenschneidergehäuse 14 ansetzender Schutzkragen 30 umschließt den oberen Abschnitt des rotierenden Spulengehäuses.

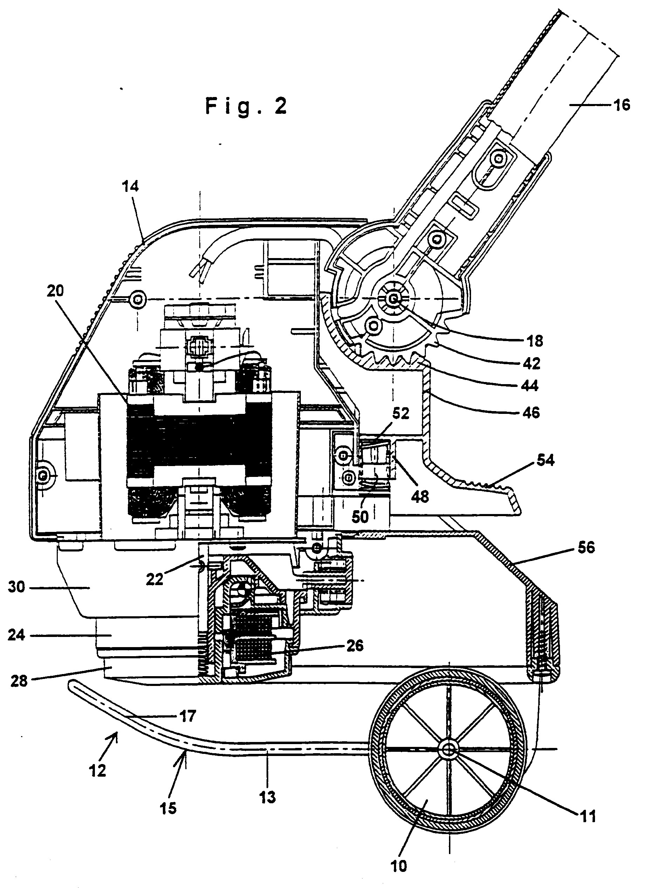

Am Fadenschneidergehäuse 14 ist ein Führungsstiel 16 um eine Horizontalachse 18 schwenkbar und in verschiedenen Stellungen verriegelbar angeordnet. Zur Verriegelung des Stiels in verschiedenen Winkelstellungen weist das Stielende einen Außenzahnkranz 42 auf, der mit einem Zahnsegment 44 in Eingriff steht, das im Oberteil eines Fußauslösers 46 angeordnet ist, der mit einem zylindrischen Hülsenansatz 48 auf eine Hohlzylinder 50 in vertikaler Richtung geführt ist. Eine innerhalb des Hohlzylinders 50 angeordnete Druckschraubenfeder 52 drückt den Fußauslöser 46 nach oben und bringt das Zahnsegment 44 in Eingriff mit dem Außenzahnkranz 42. Der Fußauslöser steht mit einer Fußraste 54 aus einer Ausnehmung des Schutzschirms 56 des Gehäuses vor. Die Fußraste 54 liegt über der Laufrolle 10 und die Wirkungslinie der Kraft, die durch Betätigung der Fußraste 54 zwecks Entkupplung von Zahnkranz 42 und Zahnsegment 44 ausgeübt wird, liegt vor der Achse 11 der Laufrolle 10, so daß um die Laufrollenachse 11 ein Drehmoment im Gegenuhrzeigersinn gemäß Fig. 2 ausgeübt wird und das Fadenschneidergehäuse auf die Kufe 12 gedrückt wird, die das Fadenschneidergehäuse in dem Übergangsabschnitt 15 zwischen dem horizontal verlaufenden Bügelteil 13 und dem nach oben gezogenen Überbrückungsabschnitt 17 abstützt. Der Fadenschneider verbleibt demgemäß in seiner stabilen Standstellung, in der er von der Laufrolle 10 und der Kufe 12 abgestützt ist, so daß feinfühlig eine Winkeleinstellung des Stiels 16 erfolgen kann, ohne daß es notwendig wäre, das Gehäuse des Fadenschneiders festzuhalten, denn es ist ein Kippen des Fadenschneiders im Uhrzeigersinn um die Achse 11 mit Sicherheit vermieden. Nach Niederdrücken der Fußraste 54 kann der Stiel 16 frei um seine Schwenkachse verschwenkt werden und nach Loslassen der Fußraste 54 erfolgt durch die Feder 52 eine automatische Einkupplung in der gewünschten Winkelstellung.

Wie aus Fig. 2 ersichtlich, liegt die Achse 18 des Schwenkgelenks in Laufrichtung vor der Drehachse 11 der Laufrolle 10 und die Achse der vertikalen Führung 48, 50 des Fußauslösers 46 liegt wiederum in Laufrichtung vor der Schwenkachse 18 des Schwenkgelenks und somit auch vor der Achse 11 der Laufrolle. Die Fußraste 54 liegt über der Laufrolle. Durch diese Anordnung wird gewährleistet, daß die Krafteinleitung beim Niederdrücken der Fußraste 54 fast momentenfrei erfolgt, weil die Wirkungslinie der Kraft vor der Mittellinie der Laufrolle liegt, so daß der Stiel 16 verstellt werden kann, ohne das Gerät festzuhalten. Die Fußraste 54 steht nicht über den Schutzschirmrand vor, so daß ein Verheddern unter Bäumen und Sträuchern verhindert ist.

Die Laufrolle 10 dient zum leichten Schieben des Gerätes und der Bügel 13, 15, 17 dient als Abstandshalter und als Anschlagschutz für das Spulengehäuse. Der Bügel wirkt als Gleitkufe 12, wenn das Gerät in nach vorn geneigter Stellung verschoben wird.

## Patentansprüche

1. Fadenschneider, bei dem:
- ein Motor (20) ein Spulengehäuse (24) antreibt, aus dem radial der Schneidfaden vorsteht;
- ein Fadenschneidergehäuse (14) den Motor (10) und das Spulengehäuse (24) umschließt;
- das Fadenschneidergehäuse (14) über eine Laufrollenanordnung (10) am Boden abstützbar ist;
- ein Führungsstiel (16) über ein Schwenkgelenk (18) mit horizontaler Achse am Fadenschneidergehäuse (14) angelenkt ist;
- das Schwenkgelenk (18) in vorbestimmten Winkelstellungen durch Rastmittel (42,44) arretierbar ist;
- die Rastmittel durch einen Fußauslöser (54) entriegelbar sind;
gekennzeichnet durch die folgenden Merkmale:
- das Fadenschneidergehäuse (14) weist ein Stützglied (12) auf, das sich unter dem Spulengehäuse (24) nach vorn erstreckt und mit einem Stützabschnitt (15) auf dem Boden abstützbar ist;
- die Achse (11) der Laufrollenanordnung (10), der Stützabschnitt (15) und der Fußauslöser (54) sind derart angeordnet, daß die Wirkungslinie der zur Entriegelung über den Fußauslöser (54) eingeleiteten Kraft bei dem durch die Laufrollenanordnung (10) und dem Stützglied auf dem Boden ruhenden Fadenschneidergehäuse (14) zwischen Achse (11) der Laufrollenanordnung (10) und Stützabschnitt (15) verläuft.

2. Fadenschneider nach Anspruch 1,
dadurch gekennzeichnet, daß das Stützglied als bügelförmige Kufe (12) ausgebildet ist, die als Abstandshalter unter dem Spulengehäuse (24) verläuft.

3. Fadenschneider nach Anspruch 1,
dadurch gekennzeichnet, daß die Rastmittel einen Außenzahnkranz (42) am Schwenkgelenk und und ein Zahnsegment (44) aufweisen, das im Oberteil des im wesentlichen in vertikaler Richtung verschiebbaren Fußauslösers (46) angeordnet ist und unter der Wirkung einer Rückholfeder (52) in den Außenzahnkranz (42) einkuppelbar ist.

4. Fadenschneider nach Anspruch 3,
dadurch gekennzeichnet, daß die durch die Gelenkachse (18) verlaufende Vertikale die Laufrolle (10) vor ihrer Drehachse (11) schneidet.

5. Fadenschneider nach Anspruch 2,
dadurch gekennzeichnet, daß der kufenartige Bügel (12) mit seinen Bügelschenkeln (13) am Gehäuse (14) seitlich der Laufrolle (10) in Höhe der Laufrollenachse (11) ansetzt, im wesentlichen horizontal nach vorn verläuft und im gekrümmten Überbrückungsabschnitt (17) bis in die Nähe des Spulengehäusedeckels (28) nach oben gezogen ist.

6. Fadenschneider nach den Ansprüchen 1, 2 und 5,
dadurch gekennzeichnet, daß der Auflagebereich (15) des kufenartigen Bügels (12) im Übergangsabschnitt zwischen dem horizontalen Teil (13) und dem nach oben gezogenen Teil (17) liegt.

7. Fadenschneider nach ASnspruch 1,
dadurch gekennzeichnet, daß der Fußauslöser (46) im Schutzschirmrand (56) des Fadenschnewidergehäuses (14) integriert ist.

8. Fadenschneider nach einem der Ansprüche 1 - 7,
dadurch gekennzeichnet, daß die Betätigungsfußraste (54) des Fußauslösers (46) vertikal über der Laufrolle (10) liegt.

9. Fadenschneider nach einem der vorhergehenden Ansprüche,
dadurch gekennzeichnet, daß der Fußauslöser (46) im Gehäuse (14) in einer vertikalen Führung (48,50 ) läuft, die auch die Rückstellfeder aufweist.

10. Fadenschneider nach Anspruch 9,
dadurch gekennzeichnet, daß die Führungsachse vor der Drehachse (11) der Laufrolle (10) liegt.

11. Fadenschneider nach Anspruch 9,
dadurch gekennzeichnet, daß die Führungsachse vor der Schwenkachse (18) des Schwenkgelenkes liegt.

## Claims

1. Strimmer, in which:
- a motor (20) powers a spool housing (24), radially from which the cutting line projects;
- a strimmer housing (14) surrounds the motor (20) and the spool housing (24);
- the strimmer housing (14) is adapted to rest on the ground via a roller arrangement (10); - a guide helve (16) is hinged on the strimmer housing (14) via a swivelling joint (18) with a horizontal axis;
- the swivelling joint (18) is adapted to be arrested by latching means (42, 44) in preset angular positions; the latching means are adapted to be unlatched by a foot-operated trigger (54);
characterised by the following features:
- the strimmer housing (14) has a supporting element (12) which extends forwards beneath the spool housing (24) and is adapted to rest by a supporting section (15) on the ground;
- the axis (11) of the roller arrangement (10), the supporting section (15) and the foot-operated trigger (54) are so arranged that the line of application of the force introduced for unlatching via the foot-operated trigger (54) extends between the axis (11) of the roller arrangement (10) and the supporting section (15) when the strimmer housing (14) is resting on the ground by means of the roller arrangement (10) and the supporting element.

2. Strimmer according to claim 1,
characterised in that the supporting element is in the form of a bow-shaped skid (12) which extends as a spacing device beneath the spool housing (24).

3. Strimmer according to claim 1,
characterised in that the locking means incorporate an external toothed ring (42) on the swivelling joint and a toothed segment (44) which is arranged in the upper portion of the foot-operated trigger (46) which is adapted to be displaced in a substantially vertical direction and is adapted to be coupled into the external toothed ring (42) under the action of a return spring (52).

4. Strimmer according to claim 3,
characterised in that the vertical line which extends through the articulation axis (18) intersects the roller (10) in front of its rotational axis (11).

5. Strimmer according to claim 2,
characterised in that the skid-type bow (12) is attached to the housing (14) by its bow side-pieces (13) to the side of the roller (10) at the same height as the roller axis (11), extends substantially horizontally forwards and in the curved bridging section (17) is swept upwards to close to the spool housing cover (28).

6. Strimmer according to claims 1, 2 and 5,
characterised in that the contact zone (15) of the skid-type bow (12) is situated in the transitional section between the horizontal part (13) and the upwardly sweeping part (17).

7. Strimmer according to claim 1,
characterised in that the foot-operated trigger (46) is integrated in the guard rim (56) of the strimmer housing (14).

8. Strimmer according to any of claims 1 to 7,
characterised in that the operating foot plate (54) of the foot-operated trigger (46) is situated vertically above the roller (10).

9. Strimmer according to any of the preceding claims
characterised in that the foot-operated trigger (46) runs in the housing (14) in a vertical guide (48, 50) which also incorporates the return spring.

10. Strimmer according to claim 9,
characterised in that the guide axis is situated in front of the rotational axis (11) of the roller (10).

11. Strimmer according to claim 9,
characterised in that the guide axis is situated in front of the swivelling axis (18) of the swivelling joint.

## Revendications

1. Coupe-herbe à fil dans le cas duquel :
- un moteur (20) entraîne un boîtier à bobine (24) dont le fil sort radialement ;
- un carter de coupe-herbe (14) entoure le moteur (20) et le boîtier à bobine (24) ;
- le carter (14) du coupe-herbe peut prendre appui sur le sol par le biais d'une roue (10) ;
- un manche (16) est fixé de manière articulée sur le carter (14) du coupe-herbe à fil au moyen d'une articulation (18) à axe horizontal ;
- l'articulation (18) peut être bloquée par des moyens d'enclenchement (42, 44) dans différentes positions angulaires prédéfinies ;
- les moyens d'enclenchement peuvent être déverrouillés à l'aide d'un déclencheur au pied (54) ;
caractérisé par les caractéristiques suivantes :
- le carter (14) du coupe-herbe à fil présente un élément d'appui (12) qui s'étend sous le boîtier à bobine (24) vers l'avant et que l'on peut poser par terre à l'aide d'un segment d'appui (15) ;
- l'axe (11) de la roue (10), le segment d'appui (15) et le déclencheur au pied (54) sont disposés de manière à ce que la ligne d'action de la force appliquée pour déverrouiller à l'aide du déclencheur au pied (54) s'étende, au niveau du carter (14) du coupe-herbe reposant sur le sol au moyen de la roue (10) et de l'élément d'appui, entre l'axe (11) de la roue (10) et le segment d'appui (15).

2. Coupe-herbe à fil selon la revendication 1, caractérisé en ce que l'élément d'appui est réalisé en tant que patin en forme d'étrier (12) qui s'étend en tant qu'écarteur sous le boîtier à bobine (24).

3. Coupe-herbe à fil selon la revendication 1, caractérisé en ce que les moyens d'enclenchement présentent une couronne à denture extérieure (42) sur l'articulation et un segment denté (44) qui est disposé dans la partie supérieure du déclencheur au pied (46) pouvant être déplacé essentiellement verticalement, et qui peut être accouplé avec la couronne à denture extérieure (42) sous l'effet d'un ressort de rappel (52).

4. Coupe-herbe à fil selon la revendication 3, caractérisé en ce que la verticale passant par l'axe d'articulation (18) coupe la roue (10) en avant de son axe de rotation (11).

5. Coupe-herbe à fil selon la revendication 2, caractérisé en ce que l'étrier semblable à un patin (12) est rapporté au carter (14) avec ses branches (13) à côté de la roue (10), à hauteur de l'axe (11) de la roue, s'étend essentiellement horizontalement vers l'avant et remonte avec son segment transversal courbe (17) jusqu'au voisinage du couvercle (28) du boîtier à bobine.

6. Coupe-herbe à fil selon les revendications 1, 2 et 5, caractérisé en ce que la zone d'appui (15) de l'étrier semblable à un patin (12) dans le segment de transition se situe entre la partie horizontale (13) et la partie qui remonte (17).

7. Coupe-herbe à fil selon la revendication 1, caractérisé en ce que le déclencheur au pied (46) est intégré dans le bord du capot de protection (56) du carter du coupe-herbe à fil (14).

8. Coupe-herbe à fil selon l'une des revendications 1 à 7, caractérisé en ce que la pédale (54) du déclencheur au pied (46) se situe verticalement au-dessus de la roue (10).

9. Coupe-herbe à fil selon l'une des revendications précédentes, caractérisé en ce que le déclencheur au pied (46) s'étend dans le carter (14) dans un dispositif de guidage vertical (48, 50) qui abrite également le ressort de rappel.

10. Coupe-herbe à fil selon la revendication 9, caractérisé en ce que l'axe du dispositif de guidage s'étend en avant de l'axe de rotation (11) de la roue (10).

11. Coupe-herbe à fil selon la revendication 9, caractérisé en ce que l'axe du dispositif de guidage se situe en avant de l'axe de pivotement (18) de l'articulation.
